# FASCICULE DE BREVET EUROPEEN

(11) **EP 3 153 406 B1**
(45) Date de publication et mention de la délivrance du brevet: **04.05.2022**
(21) Numéro de dépôt: 16290195.3
(22) Date de dépôt: 05.10.2016
(51) Int. Cl.: B64C 39/00, B64C 27/20, B64C 29/00, B64C 39/06

(54) **AERONEF À DÉCOLLAGE ET ATTERISSAGE VERTICAUX À AILES CIRCULAIRES ET COCKPIT BASCULANT, PILOTÉ PAR CONTRÔLE DIFFÉRENTIEL DES PROPULSEURS**
LUFTFAHRZEUG MIT VERTIKALER ABHEBE- UND LANDEMÖGLICHKEIT, KREISFÖRMIGEN FLÜGELN UND KIPPBAREM COCKPIT, DAS DURCH DIFFERENZIALSTEUERUNG DER TRIEBWERKE GESTEUERT WIRD
VERTICAL TAKE-OFF AND LANDING AIRCRAFT WITH CIRCULAR WINGS AND TILTING COCKPIT, PILOTED BY DIFFERENTIAL CONTROL OF THE THRUSTERS

(30) Priorité: 05.10.2015 FR 1502066
(43) Date de publication de la demande: 12.04.2017
(73) Titulaire: de la Broise, Denis, 56130 Marzan (FR)
(72) Inventeur: de la Broise, Denis, 56130 Marzan (FR)
(74) Mandataire: Derriennic, Tangui Jean

(56) Documents cités:
- US-A- 2 868 476
- US-A- 2 951 661
- US-A1- 2010 051 740
- US-A1- 2011 042 509
- US-A1- 2014 124 613

## Description

Le besoin de déplacements rapides ou d'accès à des espaces inadaptées au transport terrestre incite au développement des transports par voie aérienne. Toutefois, l'absence de pistes de décollage limite l'accessibilité à de nombreuses zones, imposant souvent un complément de déplacement par voie terrestre. Ces contraintes peuvent être résolues par l'usage d'aéronefs à décollage court ou vertical.

Le décollage vertical ou le décollage court nécessitent une puissance installée importante et la solution généralement retenue de dispositifs à ailes tournantes (hélicoptères) se fait au détriment du rayon d'action et impose des dispositifs mécaniques complexes et couteux.

Des systèmes d'aéronefs à décollage vertical équipés d'ailes fixes et tilt-rotor permettent d'augmenter le rayon d'action car le ratio portance / trainée est fortement amélioré en vol horizontal par rapport aux hélicoptères. Toutefois ces systèmes restent relativement complexes.

Une autre option consiste à faire basculer l'ensemble de l'appareil, propulsé par une ou deux hélices, depuis la position verticale lors du décollage, vers la position horizontale lors du vol de croisière, la portance étant alors obtenue grâce à des surfaces planes fixes (Cf. le projet de la NASA du puffin par exemple).

Dans le domaine des véhicules aériens sans pilote (UAV), les multicopters ont permis de réduire de façon drastique la complexité mécanique du décollage vertical : la rotation du véhicule sur chacun des axes est obtenue par pilotage différentiel de la vitesse des moteurs d'hélices. Toutefois ces systèmes impliquent un cout énergétique élevé pour leur sustentation. L'application de ces technologies au vol avec pilote est en projet (FLIKE-A par exemple).

Des UAV, associant le décollage vertical type multicopter et le vol horizontal ont été également développés: L'UAV bascule sur l'axe de tangage puis vole horizontalement, porté par une aile plan fixe (Quadshot de transition robotics inc., par exemple). Le principe est décrit par exemple dans le brevet WO 2011/081683 A1

Les ailes planes présentent l'inconvénient de produire des tourbillons marginaux. Aussi, différentes solutions d'ailes fermées (rectangulaires, ou circulaires) ont été proposées permettant de réduire la trainée induite, les plus anciennes datant des années 1900 (Blériot III par exemple).

Les performances des hélices peuvent être améliorées par l'adjonction de carénages (ducted-fan), ces éléments permettant simultanément d'améliorer la sécurité des personnes. Deux hélices tournant en sens opposés peuvent également être installées en double sur le même axe. Ces hélices « contrarotatives » permettent de réduire la turbulence de sillage.

Dès les années 30, des aérodynes ont combinées aile circulaire et ducted-fan (Stipa-Caproni et Lippisch aerodyne par exemple). Ces conceptions ont été envisagées plus récemment dans des projets à une ou deux ailes circulaires (NASA Spiral duct ESTOL par exemple). Toutefois, pour ces systèmes, le décollage reste traditionnel. Des solutions à plusieurs ailes circulaires intégrant la propulsion et permettant le décollage vertical ont été proposées. C'est le cas du Bel X22, ou plus récemment du projet de Moller M400. Ces aéronefs à moteurs thermiques réalisent la transition vol vertical/vol horizontal par la bascule des aile-rotors (tilt-rotors), la carlingue restant à l'horizontal.

Des aéronefs ont été proposés depuis les années 50, à décollage vertical, à aile circulaire intégrant la propulsion, et pour lesquels la transition de vol est réalisée par simple bascule sur l'axe de tangage. II s'agit par exemple du C450 de la SNECMA, propulsé par un réacteur. La position des pilotes et passagers dans ce type de machine doit être gérée lors de la phase de transition afin de maintenir la visibilité en vol et une position confortable des pilotes et passagers. Une solution consistant à installer un siège basculant est ainsi proposée dans le cas du C450, tandis que c'est l'ensemble du cockpit qui pivote dans le cas du Convair 49. Ces machines ne comportent qu'un seul réacteur-aile.

Le document US2014/0124613 décrit les caractéristiques techniques du préambule de la revendication 1.

### Aucune de ces solutions ne permet à ce jour de satisfaire simultanément l'ensemble des objectifs suivants :

- Pilotage, lors du décollage vertical et de l'ensemble des phases de vol, géré par poussée différentielle sur les propulseurs, permettant ainsi de simplifier ou supprimer les plans mobiles utilisés pour le contrôle de trajectoire.
- Utilisation de propulseurs carénés contribuant à la portance en remplacement des plans porteurs.
- Maintien des pilotes et passagers en position sensiblement constante par rapport à l'axe de gravitation durant l'ensemble des phases du vol et embarquement et débarquement aisés.

### La solution présentée ici répond à l'ensemble de ces objectifs:

Il s'agit d'un aéronef à décollage vertical et vol horizontal, dépourvue d'aile plane et comportant 3 ailes fermées non contiguës intégrant chacune au moins un dispositif de propulsion positionné au moins en partie dans chacun des volumes délimités par chacune de ces ailes fermées. Ces ailes fermées sont toutes fixées, sans possibilité de rotation, à une même structure de l'aéronef. Cette fixation rend ces ailes fermées toutes solidaires entre elles et avec cette structure durant l'ensemble des phases du vol.

Cet aéronef peut passer de la phase de décollage vertical (ou de vol stationnaire) à la phase de vol horizontal, et vice-versa, par rotation sur l'axe de tangage sans nécessiter la présence de tilt-rotors.

Le pilotage sur deux ou trois des axes de rotation peut être obtenu sans l'usage de plan mobiles. Ce pilotage peut être obtenu par commande différentielle de la poussée d'au moins trois des moteurs de propulsion. Par exemple, la commande de vitesse de chaque moteur électrique de propulsion peut être asservie, via un contrôleur électronique, à un dispositif électronique d'évaluation et de contrôle de l'attitude et de la dynamique de déplacement de l'aéronef du type de ceux utilisés pour les UAV multicopters et certains UAV à aile(s) planes.

L'habitacle portant le ou les pilote(s) et le ou les passager(s) éventuel(s) est articulé par rapport au reste de l'aéronef afin de permettre le maintien des pilotes et passagers dans une position sensiblement constante par rapport à l'axe de gravitation durant l'ensemble des phases du vol.

### La solution présentée Intègre donc:

- Les avantages des UAV multicopters: simplicité mécanique de la propulsion contrôlée par pilotage différentiel de la vitesse des hélices, pas d'usage ou usage réduit des plans mobiles, pas de tilt-rotors.
- Les avantages des aéronefs à ailes circulaires : allongement réduit, et vol horizontal à trainée réduite.
- La possibilité de définir les caractéristiques des ailes uniquement en fonction des objectifs de vitesse souhaités en croisière : pas de contraintes imposées par les vitesses de décollage et d'atterrissage.

Y sont associés des avantages en matière de sécurité (possibilité de moteurs multiples, hélices carénées), de performances (finesse élevée envisageable), et de confort (embarquement aisé, position stable des pilotes et passagers.

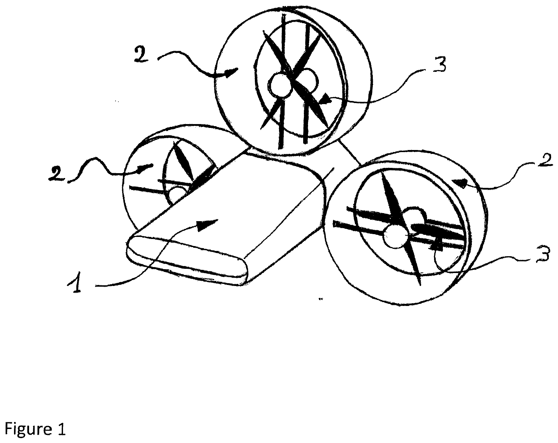

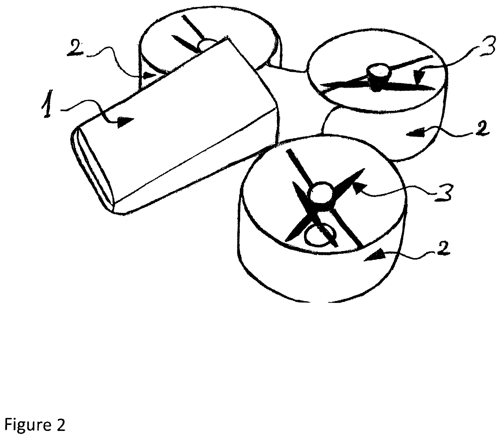

Un exemple, non limitatif, de la solution proposée est illustré sur la figure 1 (aéronef en vol horizontal) et sur la figure 2 (aéronef en position de décollage ou atterrissage, habitacle basculé). Dans cet exemple, l'aéronef comporte un habitacle (1) mobile sur l'axe de tangage par rapport au reste de l'appareil constitué d'une structure portant trois ailes circulaires (2) dans lesquelles sont positionnées des moteurs électriques et hélices contrarotatives (3). A l'embarquement et au débarquement, l'habitacle, se trouve en position proche du sol (1, figure 2) permettant un accès facile. Lors de la transition de la phase de décollage vers la phase de vol horizontal, l'habitacle reste en position sensiblement horizontale alors que le reste de l'appareil bascule sur l'axe de tangage.

En phase de vol de croisière (figure 1), l'habitacle contribue à la portance sur l'avant, améliorant ainsi la stabilité longitudinale.

## Revendications

1. Aéronef à décollage et atterrissage verticaux ne comportant ni d'aile plane ni de tilt rotor, **caractérisé en ce que** ledit aéronef comporte trois et uniquement trois ailes fermées toutes fixées, sans possibilité de rotation, à une même structure de l'aéronef, cette fixation les rendant toutes solidaires entre elles et avec la structure durant l'ensemble des phases du vol, et un habitacle portant le ou les éventuel(s) pilote(s) et le ou les éventuel(s) passager(s) qui pivote autour de l'axe de tangage indépendamment de la structure portant ces ailes fermées, et **en ce que** ces trois ailes fermées sont non contigües et intègrent au moins un dispositif de propulsion positionné au moins en partie dans chacun des volumes délimités par chacune de ces ailes fermées, la rotation de l'aéronef sur au moins deux de ses trois axes (roulis, tangage et lacet) est obtenue grâce à la modification différentielle de la poussée de trois au moins des dispositifs de propulsions.

2. Aéronef selon la revendication 1, dans lequel l'habitacle contribue à la portance sur l'avant.

3. Aéronef selon la revendication 1, dans lequel lors de la phase de décollage vers la phase de vol horizontal, l'habitacle reste en position sensiblement horizontale alors que le reste de l'appareil bascule sur l'axe de tangage.

4. Aéronef selon l'une des revendications 1 à 3, dans lequel l'habitacle est positionné à l'avant des trois ailes fermées lors de la phase de décollage.

## Patentansprüche

1. Luftfahrzeug mit Senkrechtstart und Senkrechtlandung, ohne flache Flügel und ohne Kipprotor, das sich dadurch auszeichnet, dass es drei und lediglich drei geschlossene und festliegende Flügel besitzt, die nicht rotieren und mit der Struktur des Flugzeugs fest verbunden sind. Diese Bindung führt dazu, dass sie miteinander solidarisch zusammenwirken, und auch mit der Struktur des Flugzeugs während der ganzen Dauer des Fluges zusammenwirken; hinzu kommt ein Wohnraum, der den oder bzw. die Piloten und den oder die Passagiere aufnimmt, und sich unabhängig von der Struktur, die die geschlossenen Flügel trägt, um die Querachse dreht. Ferner kennzeichnet sich das Luftfahrzeug dadurch, dass die drei geschossenen Flügel nicht Seite an Seite angelegt sind, und mindestens eine Einrichtung zur Beförderung beinhalten, die zumindest zu einem Teil in jedem der Volumen beherbergt wird, die durch diese geschossenen Flügel begrenzt werden. Hinzu kommt, dass das Rotieren des Flugzeugs um drei Achsen (Rollen, Nicken, Schlingern) durch eine differenzierte Veränderung des Antriebs von mindestens drei Antriebskörpern erfolgt.

2. Luftfahrzeug nach Patentanspruch 1, bei dem der Wohnraum zur vorderen Tragfähigkeit beiträgt.

3. Luftfahrzeug nach Patentanspruch 1, bei dem, während der Startphase bis zur Phase des senkrechten Fliegens, der Wohnraum mehr oder weniger horizontal bleibt, wohingegen der Rest des Flugzeugs längs der Rollachse kippt.

4. Luftfahrzeug nach Patentanspruch 1 und 3, bei dem der Wohnraum während der Startphase vor den drei geschlossenen Flügeln liegt.

## Claims

1. Vertical take-off and landing aircraft comprising neither a flat wing nor a tilt rotor, **characterized in that** said aircraft comprises three and only three closed wings all attached, with no possible rotation, to the same structure of the aircraft, this attachment making them all integral with each other and with the structure during all the phases of flight, and a cockpit carrying the possible pilot(s) and the possible passenger(s) which tilts around the pitch axis independently of the structure carrying these closed wings, and **in that** these three closed wings are non-contiguous and incorporate at least one propulsion device positioned at least partly in each of the volumes delimited by each of these closed wings, the rotation of the aircraft on at least two of its three axes (roll, pitch and yaw) is obtained by the differential modification of the thrust of at least three of the propulsion devices.

2. Aircraft according to claim 1, wherein the cabin contributes to the lift on the front of the aircraft.

3. Aircraft according to claim 1, wherein during the takeoff phase to the horizontal flight phase, the cockpit remains in a substantially horizontal position while the rest of the aircraft tilts on the pitch axis.

4. Aircraft according to claims 1 to 3, wherein the cockpit is positioned forward of the three closed wings during the takeoff phase.
